# EUROPEAN PATENT APPLICATION

(11) **EP 4 715 755 A1**
(43) Date of publication of application: **25.03.2026**
(21) Application number: 24818212.3
(22) Date of filing: 05.01.2024
(51) Int. Cl.: G06V 10/774, G06V 30/10

(54) **METHOD, SYSTEM, AND CLUSTER FOR TRAINING IMAGE RECOGNITION MODEL**

(30) Priority: 08.06.2023 CN 202310680382; 17.07.2023 CN 202310875855
(71) Applicant: Huawei Cloud Computing Technologies Co., Ltd., Guiyang, Guizhou, 550025 (CN)
(72) Inventor: XU, Wuheng, Guiyang, Guizhou 550025 (CN); LIAO, Minghui, Guiyang, Guizhou 550025 (CN); XIE, Zecheng, Guiyang, Guizhou 550025 (CN)
(74) Representative: Goddar, Heinz J.
(86) International application number: PCT/CN2024/070779
(87) International publication number: WO 2024/250673

(57) **Abstract**

An image recognition model training method may be applied to the field of cloud computing. The method includes: A first training apparatus on a user local side inputs, into an encoding module, a first image dataset stored on the user local side, to train the encoding module to obtain a trained encoding module. A second training apparatus on a cloud obtains the trained encoding module from the first training apparatus; and inputs a labeled second image dataset stored in the cloud into an image recognition model that includes the recognition module and the trained encoding module, to train the recognition module to obtain a trained recognition module. According to the method, an image recognition model can be trained by using image data of a user while privacy leakage of the user is avoided.

## Description

This application claims priorities to Chinese Patent Application No. 202310680382.6, filed with the China National Intellectual Property Administration on June 8, 2023 and entitled "TEXT RECOGNITION OPTIMIZATION METHOD", and to Chinese Patent Application No. 202310875855.8, filed with the China National Intellectual Property Administration on July 17, 2023 and entitled "IMAGE RECOGNITION MODEL TRAINING METHOD AND SYSTEM, AND CLUSTER", both of which are incorporated herein by reference in their entireties.

### TECHNICAL FIELD

This application relates to the field of cloud computing technologies, and in particular, to an image recognition model training method and system, and a cluster.

### BACKGROUND

Application and development of an artificial intelligence (artificial intelligence, AI) technology such as deep learning (deep learning) in the image recognition field improve image recognition efficiency and reduce labor costs. Common application of the AI technology in the image recognition field is as follows: An image recognition model is trained by using the AI technology, to implement automatic recognition for a target object in an image.

Image data needs to be used as a training set to train the image recognition model. In some scenarios, an owner of the image data and a training party of the image recognition model are not the same, and the image data may include sensitive information of the owner. Providing the image data for the training party to train the image recognition model may cause leakage of user privacy information.

### SUMMARY

Embodiments of this application provide an image recognition model training method, system, and apparatus, and a cluster, to train an image recognition model by using image data of a user while avoiding privacy leakage of the user.

According to a first aspect, an image recognition model training method is provided. An image recognition model includes an encoding module and a recognition module, the encoding module is configured to extract a feature of a target object from an image to obtain an encoding vector of the target object, and the recognition module is configured to recognize the target object based on the encoding vector of the target object. The method includes: A first training apparatus on a user local side inputs, into the encoding module, a first image dataset stored on the user local side, to train the encoding module to obtain a trained encoding module. A second training apparatus on a cloud obtains the trained encoding module from the first training apparatus; and inputs a labeled second image dataset stored in the cloud into an image recognition model that includes the recognition module and the trained encoding module, to train the recognition module to obtain a trained recognition module.

In the method, the encoding module in the image recognition model is trained on the user local side by using an image dataset of a user. On the cloud, the recognition module in the image recognition model is trained with reference to the trained encoding module by using a labeled image dataset, to complete training of the image recognition model. According to the method, the image recognition model can be trained while the image dataset of the user does not leave the user local side, thereby avoiding leakage of privacy information of the user.

In addition, compared with the image dataset, the encoding module has a smaller data amount. In the method, the encoding module is sent to the cloud, instead of sending the image dataset to the cloud, thereby avoiding privacy leakage of the user and reducing data transmission costs.

In addition, the labeled image dataset is usually an asset on the cloud. In the method, there is no need to send the labeled image dataset in the cloud to another party, thereby avoiding an asset loss of the cloud.

In a possible implementation, training the recognition model includes: extracting the feature of the target object from an image in the second image dataset based on the trained encoding module, to obtain a first encoding vector of the target object; inputting the first encoding vector into the recognition module, to recognize the target object to obtain a first recognition result; and updating a parameter of the recognition module based on the first recognition result and a label of the image in the second image dataset.

In the method, on the cloud, the feature of the target object is extracted from the labeled image dataset by using the trained encoding module, to obtain an encoding vector. The recognition module may recognize the target object based on the encoding vector. Then, a loss may be calculated based on a recognition result of the recognition module and the label, so that the parameter of the recognition module may be updated by using the loss, to implement training of the recognition module.

In a possible implementation, the encoding module corresponds to a decoding module, and training the encoding module includes: extracting the feature of the target object from an image in the first image dataset based on the encoding module, to obtain a second encoding vector of the target object; inputting the second encoding vector into the decoding module to generate a first image; displaying the first image and the image in the first image dataset; and completing training of the encoding module when a training termination operation performed by a user is received.

In this implementation, in a training process of the encoding module, the decoding module corresponding to the encoding module generates an image based on an encoding vector extracted by the encoding module. The generated image and an image that is used as a training set of the encoding module are displayed, so that the user can see training effect of the encoding module by using naked eyes, and then can control training of the encoding module. In other words, the user can control training of the encoding module without professional model training knowledge.

In a possible implementation, the encoding module corresponds to a decoding module, and training the encoding module includes: extracting the feature of the target object from an image in the first image dataset based on the encoding module, to obtain a second encoding vector of the target object; inputting the second encoding vector into the decoding module to generate a second image; and updating a parameter of the encoding module based on the image in the first image dataset and the second image.

In this implementation, in a training process of the encoding module, the decoding module corresponding to the encoding module generates an image based on an encoding vector extracted by the encoding module. Training effect of the encoding module may be obtained by calculating a similarity between the generated image and an image that is used as a training set of the encoding module, and then whether to continue training or terminate training may be determined.

In a possible implementation, the method further includes: A verification apparatus on the user local side obtains the trained recognition module from the second training apparatus; extracts the feature of the target object from the image in the first image dataset based on the trained encoding module, to obtain a third encoding vector of the target object; inputs the third encoding vector into the trained encoding module, to recognize the target object to obtain a second recognition result; and when the second recognition result is incorrect, indicates the first training apparatus to retrain the encoding module.

In this implementation, the verification apparatus may verify effect of the image recognition model on the user local side, and the image recognition model is verified by using image data of the user while leakage of privacy information of the user is avoided. In addition, when a recognition result is incorrect, the verification apparatus triggers retraining of the encoding module, and further triggers retraining of the recognition module, to implement retraining of the entire image recognition model. This process does not require manual intervention, so that an automation degree of the image recognition model is improved.

In a possible implementation, inputting, into the encoding module, the first image dataset stored on the user local side includes: recognizing, in the image in the first image dataset, a local area in which the target object is located; and inputting the local area into the encoding module.

In this implementation, the local area in which the target object is located may be used as a training set to train the encoding module. Compared with using an entire original image as a training set to train the encoding module, this implementation can reduce calculation complexity in a training process, and save computing resources.

In a possible implementation, the image in the first image dataset and the image in the second image dataset each include a text; training the encoding module includes: training a capability of the encoding module for extracting a text feature from the image in the first image dataset; and training the recognition module includes: extracting a text feature from the image in the second image dataset based on the trained encoding module, to obtain the first encoding vector; and inputting the first encoding vector into the recognition module, to recognize the text in the image in the second image dataset to obtain the first recognition result. For example, an area in which the text in the image is located has interference information such as a watermark or a seal, or the text is a handwritten text.

In this implementation, the method provided in this embodiment of this application may be used to train a text recognition model. Training of the text recognition model requires a large quantity of images that include texts, and these images usually include a large amount of privacy information. According to the method provided in this embodiment of this application, an image recognition model that meets a user requirement can be obtained through training while leakage of user privacy information is avoided.

According to a second aspect, an image recognition model training system is provided. An image recognition model includes an encoding module and a recognition module, the encoding module is configured to extract a feature of a target object from an image to obtain an encoding vector of the target object, and the recognition module is configured to recognize the target object based on the encoding vector of the target object. The system includes: a first training apparatus on a user local side, configured to input, into the encoding module, a first image dataset stored on the user local side, to train the encoding module to obtain a trained encoding module; and a second training apparatus on a cloud, configured to: obtain the trained encoding module from the first training apparatus; and input a labeled second image dataset stored in the cloud into an image recognition model that includes the recognition module and the trained encoding module, to train the recognition module to obtain a trained recognition module.

In a possible implementation, the second training apparatus is configured to: extract the feature of the target object from an image in the second image dataset based on the trained encoding module, to obtain a first encoding vector of the target object; input the first encoding vector into the recognition module, to recognize the target object to obtain a first recognition result; and update a parameter of the recognition module based on the first recognition result and a label of the image in the second image dataset.

In a possible implementation, the encoding module corresponds to a decoding module, and the first training apparatus is configured to: extract the feature of the target object from an image in the first image dataset based on the encoding module, to obtain a second encoding vector of the target object; input the second encoding vector into the decoding module to generate a first image; display the first image and the image in the first image dataset; and complete training of the encoding module when a training termination operation performed by a user is received.

In a possible implementation, the encoding module corresponds to a decoding module, and the first training apparatus is configured to: extract the feature of the target object from an image in the first image dataset based on the encoding module, to obtain a second encoding vector of the target object; input the second encoding vector into the decoding module to generate a second image; and update a parameter of the encoding module based on the image in the first image dataset and the second image.

In a possible implementation, the system further includes a verification apparatus on the user local side, configured to: obtain the trained recognition module from the second training apparatus; extract the feature of the target object from the image in the first image dataset based on the trained encoding module, to obtain a third encoding vector of the target object; input the third encoding vector into the trained encoding module, to recognize the target object to obtain a second recognition result; and when the second recognition result is incorrect, indicate the first training apparatus to retrain the encoding module.

In a possible implementation, the first training apparatus is further configured to: recognize, in the image in the first image dataset, a local area in which the target object is located; and input the local area into the encoding module.

In a possible implementation, the image in the first image dataset and the image in the second image dataset each include a text; the first training apparatus is configured to train a capability of the encoding module for extracting a text feature from the image in the first image dataset; and the second training apparatus is configured to: extract a text feature from the image in the second image dataset based on the trained encoding module, to obtain the first encoding vector; and input the first encoding vector into the recognition module, to recognize the text in the image in the second image dataset to obtain the first recognition result.

According to a third aspect, an image recognition model training method is provided, applied to a training apparatus on a cloud. An image recognition model includes an encoding module and a recognition module, the encoding module is configured to extract a feature of a target object from an image to obtain an encoding vector of the target object, and the recognition module is configured to recognize the target object based on the encoding vector of the target object. The method includes: obtaining a trained encoding module from a user local side, where the trained encoding module is obtained through training on the user local side by using a first image dataset stored on the user local side; and inputting a labeled second image dataset stored in the cloud into an image recognition model that includes the recognition module and the trained encoding module, to train the recognition module to obtain a trained recognition module.

In a possible implementation, training the recognition model includes: extracting the feature of the target object from an image in the second image dataset based on the trained encoding module, to obtain a first encoding vector of the target object; inputting the first encoding vector into the recognition module, to recognize the target object to obtain a first recognition result; and updating a parameter of the recognition module based on the first recognition result and a label of the image in the second image dataset.

In a possible implementation, an image in the first image dataset and the image in the second image dataset each include a text; and training the recognition module includes: extracting a text feature from the image in the second image dataset based on the trained encoding module, to obtain the first encoding vector; and inputting the first encoding vector into the recognition module, to recognize the text in the image in the second image dataset to obtain the first recognition result.

According to a fourth aspect, an image recognition model training apparatus is provided. An image recognition model includes an encoding module and a recognition module, the encoding module is configured to extract a feature of a target object from an image to obtain an encoding vector of the target object, and the recognition module is configured to recognize the target object based on the encoding vector of the target object. The apparatus is located on a cloud, and the apparatus includes: an obtaining module, configured to obtain a trained encoding module from a user local side, where the trained encoding module is obtained through training on the user local side by using a first image dataset stored on the user local side; and an input module, configured to input a labeled second image dataset stored in the cloud into an image recognition model that includes the recognition module and the trained encoding module, to train the recognition module to obtain a trained recognition module.

In a possible implementation, the apparatus further includes an update module, where the input module is configured to: extract the feature of the target object from an image in the second image dataset based on the trained encoding module, to obtain a first encoding vector of the target object; and input the first encoding vector into the recognition module, to recognize the target object to obtain a first recognition result; and the update module is configured to update a parameter of the recognition module based on the first recognition result and a label of the image in the second image dataset.

In a possible implementation, an image in the first image dataset and the image in the second image dataset each include a text, and the input module is configured to: extract a text feature from the image in the second image dataset based on the trained encoding module, to obtain the first encoding vector; and input the first encoding vector into the recognition module, to recognize the text in the image in the second image dataset to obtain the first recognition result.

According to a fifth aspect, a computing device cluster is provided, including at least one computing device. Each computing device includes a processor and a memory, and a processor of the at least one computing device is configured to execute instructions stored in a memory of the at least one computing device, to enable the computing device cluster to perform the method provided in the third aspect.

According to a sixth aspect, a computer-readable storage medium is provided, including computer program instructions. When the computer program instructions are executed by a computing device cluster, the computing device cluster performs the method provided in the third aspect.

According to a seventh aspect, a computer program product including instructions is provided. When the instructions are run by a computer device cluster, the computer device cluster is enabled to perform the method provided in the third aspect.

For beneficial effects of the second aspect to the seventh aspect, refer to the foregoing descriptions of the beneficial effects of the first aspect. Details are not described herein again.

### BRIEF DESCRIPTION OF DRAWINGS

FIG. 1 is a diagram of a cheque image according to an embodiment of this application;
FIG. 2 is a diagram of a bank electronic receipt image according to an embodiment of this application;

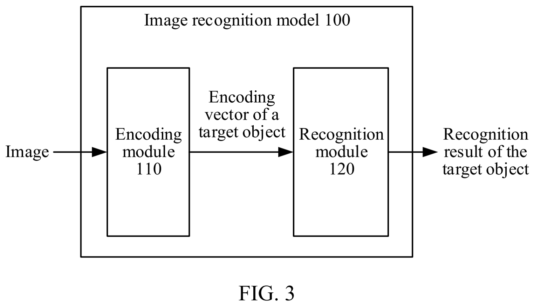

FIG. 3 is a diagram of a structure of an image recognition model according to an embodiment of this application;
FIG. 4 is a diagram of an architecture system according to an embodiment of this application;
FIG. 5 is a flowchart of an image recognition model training method according to an embodiment of this application;
FIG. 6 is a diagram of an encoding module training solution according to an embodiment of this application;
FIG. 7 is a diagram of a recognition module training solution according to an embodiment of this application;
FIG. 8 is a diagram of image recognition model verification according to an embodiment of this application;
FIG. 9 is a diagram of an encoding module training solution according to an embodiment of this application;
FIG. 10A is a diagram of an image generated by a decoding module according to an embodiment of this application;
FIG. 10B is a diagram of an image generated by a decoding module according to an embodiment of this application;
FIG. 11 is a diagram of interaction between a user local side and a cloud according to an embodiment of this application;
FIG. 12 is a block diagram of an image recognition model training system according to an embodiment of this application;
FIG. 13 is a flowchart of an image recognition model training method according to an embodiment of this application;
FIG. 14 is a diagram of a structure of an image recognition model training apparatus according to an embodiment of this application;
FIG. 15 is a diagram of a structure of a computing device according to an embodiment of this application;
FIG. 16 is a diagram of a structure of a computing device cluster according to an embodiment of this application; and
FIG. 17 is a diagram of a structure of a computing device cluster according to an embodiment of this application.

### DESCRIPTION OF EMBODIMENTS

The following describes solutions provided in embodiments of this application with reference to the accompanying drawings. In embodiments of this application, "a plurality of" means two or more.

For ease of understanding the solutions in embodiments of this application, before the solutions in embodiments of this application are described in detail, some technical terms that may be used in embodiments of this application are first described.

Generative model (generative model, GM): A model is built based on a specified condition, and a result is obtained by using the built model. Specifically, the generative model includes an encoder and a decoder. The encoder is a module that is obtained through training based on a deep neural network by using massive datasets and that can extract an essential rule and a probability distribution of data. The decoder is configured to generate new data by using the essential rule and the probability distribution of the data that are extracted by the encoder. Extracting the essential rule and the probability distribution of the data may be referred to as extracting a feature.

Data privacy protection (data privacy protection, DPP): is a method for protecting sensitive data of a user (such as an enterprise or an individual). Generally, data privacy protection has a requirement that user data does not leave a user local side, to ensure privacy security.

Optical character recognition (optical character recognition, OCR): is a process of analyzing and recognizing an image file of a text material to obtain layout information and a text. The layout information is also referred to as a text image area, and refers to a location of a text in an image. OCR usually includes two processes: text detection and text recognition (text recognition). Text detection is a process of detecting a text image area in an image, and text recognition is a process of extracting a text from the text image area.

Computer vision (computer vision, CV): is a science of how to make machines "view". Further, computer vision refers to technologies such as recognition, tracking, and measurement on a target in an image by using a camera and a computer instead of human eyes. In addition, in computer vision, the image may be further processed, and the computer is used to process the image into an image that is more suitable for human eye observation or transmission to an instrument for detection. Common computer vision technologies include OCR, image classification, object detection, object segmentation, target tracking, and the like.

Deep learning (deep learning): is a type of machine learning technology based on a deep neural network algorithm, and mainly features multiple nonlinear transformation used to process and analyze data. Deep learning is mainly applied to scenarios such as perception and decision-making in the artificial intelligence field, for example, image recognition, speech recognition, natural language translation, and computer gaming.

In some scenarios, due to particularity of a user image, an image recognition model needs to be specially trained for the user image. That is, special training needs to be performed to recognize a target object from the user image.

For example, in a task of recognizing a text from an image, if there is interference information such as a watermark or a seal at a location of the text in the image, or the text is a handwritten text, it is difficult for a conventional text recognition model to recognize the text from the image. Therefore, a text recognition model needs to be specially trained for such an image. The text recognition model herein is a model for recognizing a text from an image. Therefore, the text recognition model is an image recognition model.

For another example, in a task of recognizing a target object from an image, if there is interference information such as a watermark at a location of the target object in the image, or the target object is not a common object, it is difficult for a conventional object recognition model to recognize the target object from the image. Therefore, an image recognition model also needs to be specially trained for such an image or such a target object.

Image recognition model training is work with high professionalism and high computing power requirements. Many users do not have a condition or capability for training an image recognition model. Therefore, a dedicated organization needs to train the image recognition model for the user. In other words, an owner of an image and a training party of a model are usually not the same.

In a solution, when the owner of the image and the training party of the model are not the same, the owner of the image sends the image to the training party of the model. The training party of the model labels the image, and trains an image recognition model by using a labeled image. This solution may have the following problems.

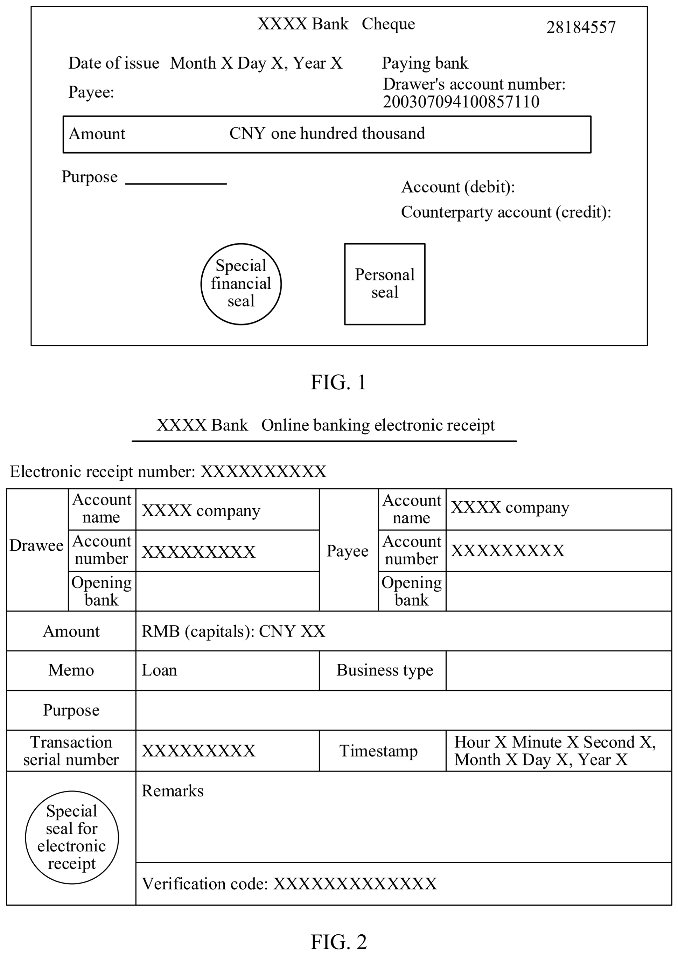

Privacy information is leaked. Specifically, the image may include sensitive information. The sensitive information may also be referred to as privacy information, and is information related to privacy of a person or an organization. For example, a user wants to obtain an image recognition model that can recognize a text from a cheque image. As shown in FIG. 1, the cheque image includes sensitive information such as a payee name, an account, an amount, and a purpose. For another example, a user wants to obtain an image recognition model that can recognize a text from a bank electronic receipt image. As shown in FIG. 2, the bank electronic receipt image includes sensitive information of a drawee, sensitive information of a payee, an amount, a purpose, and the like. If the image including the sensitive information is sent to a model training party, privacy information may be leaked.

A data amount is large, and data transmission costs are high. Specifically, an image recognition model needs a large amount of training data, and this requires that a large quantity of images be transmitted to a model training party, resulting in high data transmission costs.

User image labeling is time-consuming and labor-consuming, and labeling costs are high.

In addition, in this solution, if a trained image recognition model has poor effect, retraining of the image recognition model needs to be manually triggered, and an automation degree of model training is low.

Embodiments of this application provide an image recognition model and a training method for the model. The image recognition model includes an encoding module and a recognition module. The encoding module is configured to extract a feature of a target object from an image, and the recognition module is configured to recognize the target object based on the feature extracted by the encoding module. In the method, the encoding module is trained on a user local side by using an image dataset of a user. Then, on a cloud, the recognition module is trained with reference to the trained encoding module by using a labeled image dataset, to complete training of the image recognition model. According to the training method, the image recognition model can be trained while the image dataset of the user does not leave the user local side, thereby avoiding leakage of privacy information of the user. In addition, there is no need to transmit the image dataset between different parties, so that data transmission costs are reduced.

The following describes an image recognition model and a training method provided in embodiments of this application.

FIG. 1 shows an image recognition model 100 according to an embodiment of this application. As shown in FIG. 1, the image recognition model 100 includes an encoding module 110 and a recognition module 120.

An input of the encoding module 110 is an image. The encoding module 110 may extract a feature of a target object from the input image, and obtain and output an encoding vector of the target object. The encoding vector of the target object is the feature extracted by the encoding module 110 from the image.

The encoding vector of the target object that is output by the encoding module 110 is an input of the recognition module 120. The recognition module 120 may recognize the target object based on the input encoding vector, and obtain and output a recognition result of the target object.

The image recognition model 100 may use a neural network structure. The encoding module 110 includes one or more neural network layers, and the recognition module 120 may also include one or more neural network layers. Each neural network layer has one or more parameters, and data that is input into the neural network layer is transformed (for example, nonlinearly transformed) by using the one or more parameters. The transformed data may be output to a next layer or output as a final result.

In some embodiments, the encoding module 110 may use an encoder structure in a transformer. Specifically, the encoding module 110 includes a plurality of encoding layers (encoder). At the encoding layer, the feature of the target object in the image is extracted by using a self-attention (self-attention) mechanism or the like, to obtain the encoding vector of the target object. In another embodiment, the encoding module 110 may alternatively use another neural network structure, for example, a recurrent neural network (recurrent neural network, RNN) or a convolutional neural network (convolutional neural network, CNN).

In some embodiments, the recognition module 120 includes a feature conversion layer and a classification layer. Specifically, a process in which the encoding module 110 extracts the feature of the target object from the input image may be understood as a process of converting high-dimensional information of the image (that is, original information of the image) into low-dimensional information of the image. Compared with the high-dimensional information, the low-dimensional information retains a key feature of the target object, but lacks details. To improve recognition accuracy, low-dimensional information (that is, the encoding vector of the target object) extracted by the encoding module 110 needs to be converted into high-dimensional information. In other words, details need to be supplemented based on information represented by the encoding vector. This task is performed by the feature conversion layer. In an example, the feature conversion layer may be an RNN. In another example, the feature conversion layer may be a CNN.

The classification layer performs classification on the target object based on data output by the feature conversion layer, to recognize the target object. In an example, when the target object is a text, the classification layer is obtained through training based on a connectionist temporal classification (connectionist temporal classification, CTC) algorithm. In other words, the classification layer recognizes the text based on the CTC algorithm. In an example, when the target object is an object in the image, the classification layer is obtained through training based on a cross entropy algorithm or a softmax algorithm. In other words, the classification layer recognizes the object based on the cross entropy algorithm or the softmax algorithm.

The foregoing example describes the image recognition model 100 provided in embodiments of this application. The following describes a system architecture for training the image recognition model 100.

First, a system architecture provided in an embodiment of this application is described. The system architecture may be used to implement the training method provided in embodiments of this application, to obtain the image recognition model 100.

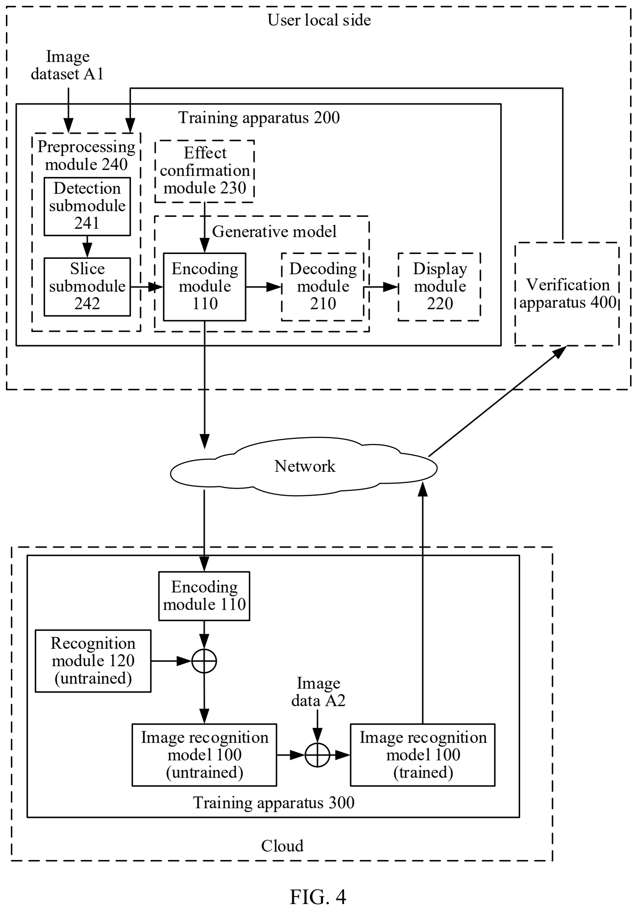

As shown in FIG. 4, the system architecture includes a training apparatus 200 located on a user local side and a training apparatus 300 located on a cloud.

The training apparatus 200 is configured to train, by using an image dataset A1 stored on the user local side, a capability of an encoding module 110 for extracting a feature of a target object from an image. The image dataset A1 includes a plurality of images, and the images include the target object. The training apparatus 200 may input the image dataset Al into the encoding module 110, so that the encoding module 110 uses the image dataset Al as a training set to train the capability for extracting the feature of the target object.

In some embodiments, as shown in FIG. 4, the training apparatus 200 includes a decoding module 210 corresponding to the encoding module 110. The decoding module 210 is configured to generate an image including the target object by using an encoding vector that is of the target object and that is extracted by the encoding module 110. For example, the encoding module 110 and the decoding module 210 may form a generative model. That is, the encoding module 110 may be implemented as an encoder in the generative model, and the decoding module 210 may be implemented as a decoder in the generative model.

Whether the encoding module 110 has the capability for extracting the feature of the target object from the image in the image dataset A1 may be determined through comparison on a similarity between the image generated by the decoding module 210 and the image in the image dataset A1.

In an example of this embodiment, as shown in FIG. 4, the training apparatus 200 includes a display module 220. The display module 220 is configured to display the image generated by the decoding module 210 and display the image in the image dataset A1, so that a user can see the image generated by the decoding module 210 and the image in the image dataset A1. In this way, the similarity between the image generated by the decoding module 210 and the image in the image dataset A1 can be determined by using human eyes, so that when the similarity between the image generated by the decoding module 220 and the image in the image dataset A1 is relatively high, training of the encoding module 110 can be terminated, to obtain a trained encoding module. For example, the training apparatus 200 includes an effect confirmation module 230. The effect confirmation module 230 may receive a training termination operation performed by the user, and in response to the operation, terminate training of the encoding module 110, that is, complete training of the encoding module 110, to obtain the trained encoding module 110.

In another example of this embodiment, the training apparatus includes a similarity calculation module (not shown). The similarity calculation module may calculate the similarity, for example, a pixel similarity, between the image generated by the decoding module 210 and the image in the image dataset A1. Then, whether to terminate training of the encoding module 110 is determined based on the similarity obtained through calculation.

In some embodiments, as shown in FIG. 4, a preprocessing module 240 is further disposed on the user local side. The preprocessing module 240 is configured to preprocess the image dataset A1 before the image dataset A1 is input into the encoding module 110. Specifically, the preprocessing module 240 includes a detection submodule 241 and a slice submodule 242. The detection submodule 241 is configured to detect a location of the target object in the image, that is, detect a local area in which the target object is located in the image. The slice submodule 242 is configured to slice off the local area in which the target object is located in the image, and input the local area that is sliced off into the encoding module 110. In this way, the encoding module 110 only needs to extract the feature of the target object from the local area. Compared with the entire image, the local area has a smaller range and fewer pixels. Therefore, compared with extracting the feature of the target object from the entire image, extracting the feature of the target object from the local area requires fewer computing resources.

In an example of this embodiment, the target object is a text, and the detection module may be a pre-trained deep bidirectional neural network (deep bidirectional network, DBNET). The DBNET is a deep learning model used for text detection, and can detect a text area in an image and output location and size information of the text area. Therefore, the area in which the text is located in the image and a size of the area may be obtained.

In some embodiments, as shown in FIG. 4, a verification apparatus 400 is further deployed on the user local side. The verification apparatus 400 verifies effect of the trained image recognition model 100, and triggers retraining of the encoding module 110 and the recognition module 120 when the effect is poor.

Still refer to FIG. 4. The training apparatus 300 on the cloud may obtain the trained encoding module 110 from the training apparatus 200. The trained encoding module 110 and the untrained recognition module 120 form an untrained image recognition model 100. The training apparatus 300 may train the untrained image recognition model 100 by using an image dataset A2 stored in the cloud. Training performed by the training apparatus 300 on the image recognition model 100 is specifically training the recognition module 120. To be specific, in a training process of the image recognition model 100, a parameter of the recognition module 120 is updated, but a parameter of the encoding module 110 is not updated. The image dataset A2 is labeled data. Specifically, an image in the image dataset A2 includes the target object, and the image has a label of the target object. Supervised training of the image recognition model 110 may be implemented by using the image dataset A2, so that the image recognition model 110 learns a capability for recognizing the target object.

The foregoing briefly describes functions of the apparatuses and modules in the system architecture provided in embodiments of this application. The functions of the apparatuses and modules are further specifically described in the following method embodiments.

Each apparatus in the foregoing system architecture may be implemented as any apparatus, device, cluster, or platform that has a data processing function. In some embodiments, the apparatuses in the system architecture may be implemented in a hardware manner. For example, the training apparatus 200 or the training apparatus 300 may be a server. In some embodiments, the apparatuses in the system architecture may be implemented in a software manner. For example, the training apparatus 200 or the training apparatus 300 may be a virtual machine (virtual machine, VM) or a container (container).

The foregoing describes the image recognition model and the system architecture provided in embodiments of this application. The following describes, with reference to the image recognition model and the system architecture described above, the image recognition model training method provided in embodiments of this application.

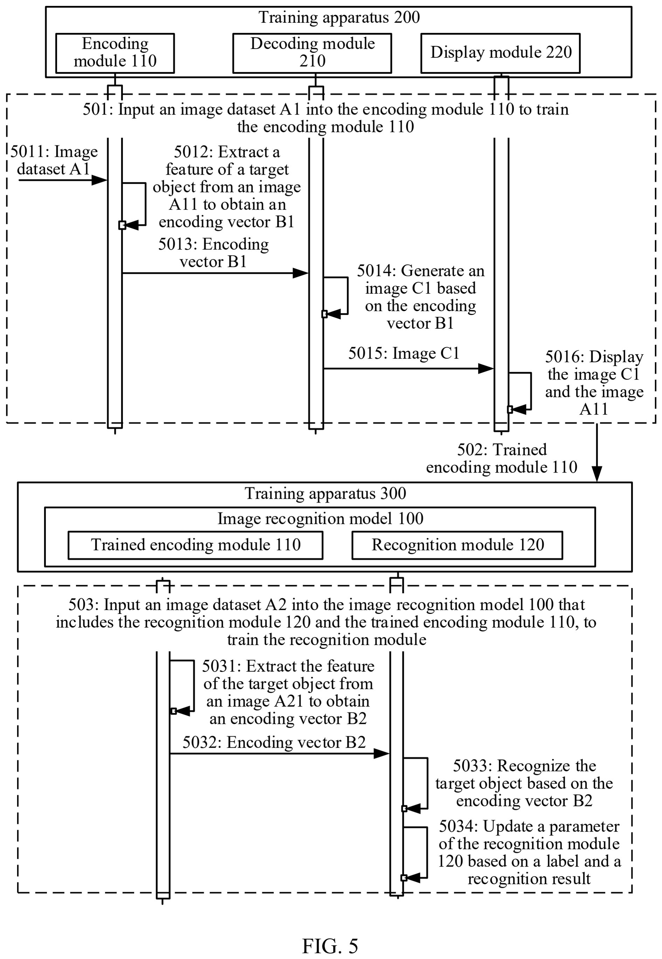

Refer to FIG. 5. The training apparatus 200 on the user local side may perform step 501, to input the image dataset A1 into the encoding module 110, to train the encoding module 110.

The image dataset A1 is data stored on the user local side. When step 501 is performed, the training apparatus 200 obtains the image dataset A1 from storage on the user local side, and inputs the image dataset A1 into the encoding module 110 deployed on the user local side. Therefore, the image dataset A1 can be input into the encoding module 110 without using an external network such as the Internet, thereby avoiding leakage of user privacy data.

The image dataset A1 includes a plurality of images such as an image A11. The image A11 has a target object of the image recognition model 100. The target object may be a text, or may be an object (for example, a person, a vehicle, or a plant). For example, the image A11 is the cheque image shown in FIG. 1. The target object may be a text in the cheque image, for example, "CNY one hundred thousand", "200307094100857110", or "28184557".

In some embodiments, as shown in FIG. 5, step 501 may include step 5011 and step 5012. In step 5011, the training apparatus 200 directly inputs the image dataset A1 into the encoding module 110. In step 5012, the encoding module 110 extracts a feature of the target object from an image (for example, the image A11) in the image dataset A1, to obtain an encoding vector B1.

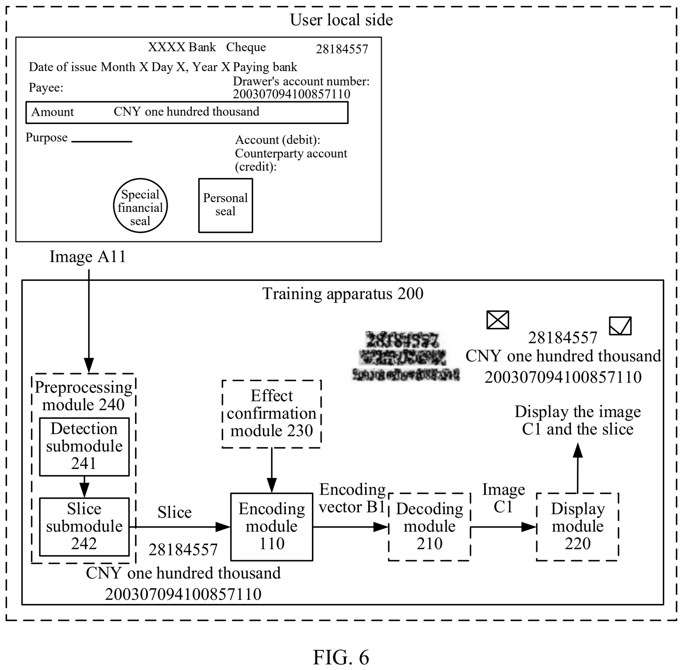

In some embodiments, as shown in FIG. 6, the training apparatus 200 includes a preprocessing module 240. The preprocessing module 240 may detect an area in which the target object is located in the image (for example, the image A11). The slice submodule 242 may slice off the area in which the target object is located, to obtain a slice. The area in which the target object is located is a local area of the image A11. In other words, the obtained slice is the local area of the image A11. The slice may be input into the encoding module 110. The encoding module 110 may extract the feature of the target object from the slice, to obtain the encoding vector B1. Compared with extracting the feature of the target object from the entire image, extracting the feature of the target object from the slice can reduce a calculation amount and save computing resources.

Refer to FIG. 5 or FIG. 6. In step 5013, the encoding module 110 may input the encoding vector B1 into the decoding module 210. The decoding module 210 generates an image C1 based on the encoding vector B1.

In an example, in step 5014, the decoding module 210 may input the image C1 into the display module 220. In step 5014, the display model 220 may display the image C1. The display model 220 may further display the image A11 or the slice. When the image that is input into the encoding module 110 is the image A11, the display model 220 displays the image A11. When the image that is input into the encoding module 110 is the slice, the display model 220 displays the slice. In an example, the display model 220 displays the image All or the slice while displaying the image C1. In this way, even if a user has no model training-related knowledge, the user can learn of training effect of the encoding module 110 by observing the image C1 and the image A11 or the slice. When a difference between the image C1 and the image A11 or the slice is relatively large, or when a difference between the target object in the image C1 and the target object in the image A11 or the slice is relatively large, the user does not perform a training termination operation, so that the encoding module 110 and the decoding module 210 continue to perform iterative training. The user may perform a training termination operation when the user observes that the difference between the image C1 and the image A11 or the slice is relatively small, or the difference between the target object in the image C1 and the target object in the image A11 or the slice is relatively small. The effect confirmation module 230 may receive the training termination operation, and in response to the training termination operation, terminate training of the encoding module 110, to obtain the trained encoding module 110.

In this example, an image (that is, the image C1) generated based on the encoding vector B1 and an original image (that is, the image A11 or the slice) are displayed, so that visualization of training of the encoding module 110 is implemented, and the user can know when training of the encoding module 110 can be terminated, to obtain the trained encoding module 110. In addition, this manner depends on observation by the user, and a problem that training of the encoding module 110 is difficult to converge may not exist.

In an example, the training apparatus 200 may calculate a similarity between the image (that is, the image C1) generated based on the encoding vector B1 and the original image (that is, the image A11 or the slice). In an example, the similarity between the image C1 and the original image may be specifically a pixel similarity between the image C1 and the original image, for example, a Euclidean distance between pixels. Parameters of the encoding module 110 and the decoding module 210 are updated based on the similarity between the image C1 and the original image. When the similarity between the image C1 and the original image is greater than a preset threshold, training may be terminated, that is, training of the encoding module 110 is completed, to obtain the trained encoding module 110.

In this example, the encoding module 110 is trained based on a pixel degree between the image generated based on the encoding vector B1 and the original image, and the user does not need to participate, thereby reducing user operations.

In the foregoing manner, training of the encoding module 110 can be completed on the user local side.

Still refer to FIG. 5. The training apparatus 300 located on the cloud may obtain the trained encoding module 110 from the training apparatus 200 by performing step 502. Specifically, the training apparatus 200 on the user local side may send the trained encoding module 110 to the training apparatus 300 on the cloud through a network. The trained encoding module 110 includes network structure information and parameters. Compared with an image dataset (for example, the image dataset A1) used as a training set, the trained encoding module 110 has a smaller data amount. Generally, a data amount of the trained encoding module 110 is less than 1 GB. In addition, the trained encoding module 110 does not include the image dataset of the user, and does not cause a privacy leakage problem. Therefore, the trained encoding module is sent to the cloud, so that a transmission bandwidth is reduced and transmission costs are reduced while privacy leakage is avoided.

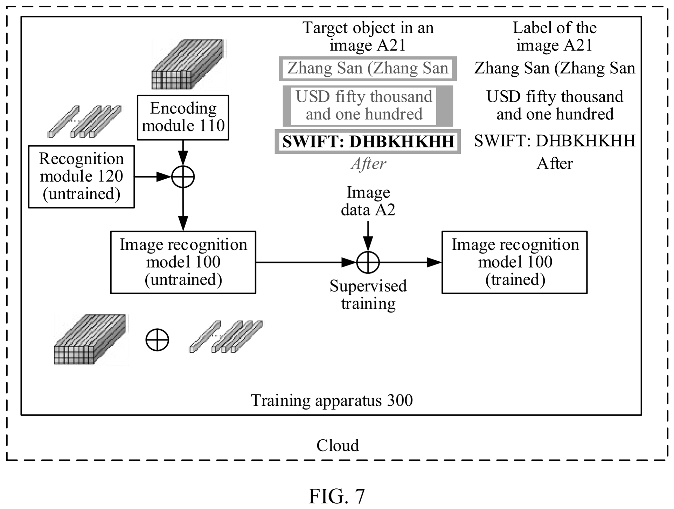

An untrained recognition module 120 is deployed on the cloud. As shown in FIG. 7, after obtaining the trained encoding module 110, the training apparatus 300 forms the image recognition model 100 by using the recognition module 120 and the trained encoding module 110. Then, in step 503, the image dataset A2 is input into the recognition model 100 that includes the recognition module 120 and the trained encoding module 110, to train the recognition module 120.

The image dataset A2 is a labeled image dataset owned by the cloud. The labeled image dataset includes a plurality of images such as an image A21. As shown in FIG. 7, the image A21 includes the target object and a label of the target object. Supervised training may be performed on the recognition module 120 in the image recognition model 100 by using the labeled image dataset, so that the recognition module 120 learns a capability for recognizing the target object.

In some embodiments, the target object in the image in the image dataset A2 and the target object in the image in the image dataset A1 have the same or similar interference information or features. For example, all areas in which the target object is located have a watermark or a seal. For another example, the target object is a handwritten text. In this way, consistency between the image dataset used for the recognition module and the image dataset of the user can be ensured, thereby ensuring recognition effect of the trained image recognition model for the image dataset of the user.

In some embodiments, the image dataset A2 may be data synthesized based on a sample image provided by the user. Specifically, the user may provide one or more sample images for the cloud, and the sample images may be anonymized. The sample image shows interference information or a feature of the target object. The cloud may generate, based on the interference information or the feature of the target object displayed in the sample image, an image including the target object, and interference information or a feature of the target object in the generated image is the same as or similar to the interference information or the feature of the target object in the sample image.

In some embodiments, the image dataset A2 may be data accumulated in the cloud.

In some embodiments, step 503 includes step 5031, step 5032, step 5033, and step 5034. In step 5031, the image dataset A2 is input into the encoded encoding module 110, and the trained encoding module 110 extracts the feature of the target object from the image (for example, the image A21) in the image dataset A2, to obtain an encoding vector B2. The trained encoding module 110 may input the encoding vector into the recognition module 120 by using step 5032.

In step 5033, the recognition module 120 recognizes the target object based on the encoding vector B2, to obtain a recognition result. Specifically, as described above, the recognition module 120 includes a feature conversion layer and a classification layer. At the feature conversion layer, feature conversion is performed on the encoding vector B2, for example, the low-dimensional encoding vector B2 is converted into high-dimensional information. At the classification layer, classification is performed based on a converted feature to obtain the recognition result.

Then, in step 5034, a parameter of the recognition module 120 is updated based on the recognition result obtained in step 5033 and the label of the target object. Specifically, the parameter of the recognition module 120 is updated in a direction of reducing a difference between the recognition result obtained in step 5033 and the label of the target object.

In this way, through a plurality of iterations, training of the recognition module 120 can be completed, to obtain a trained recognition module 120.

In addition, labeled data is usually an asset on the cloud. If the labeled data is sent to another party, the asset on the cloud may be lost. In this embodiment of this application, the cloud uses the labeled image dataset to train the recognition module 120 in the image recognition model 100, so that supervised training of the image recognition model 100 is completed while a loss of the asset on the cloud is avoided.

The trained recognition module 120 and the trained encoding module 110 form a trained image recognition model 100. The trained image recognition model 100 may be deployed on the user local side, to recognize the target object from the image in the image dataset (for example, the image dataset A1) of the user on the user local side by using the image recognition model 100.

In some embodiments, as described above, the trained encoding module 110 is obtained through training on the user local side, and therefore, the user local side has the trained encoding module 110. The training apparatus 300 may send the trained recognition module 120 to the user local side. The trained recognition module 120 and the trained encoding module 110 are combined into the image recognition model 100 on the user local side.

In some embodiments, the cloud may send the image recognition model 100 that includes the trained encoding module 110 and the trained recognition module 120 to the user local side.

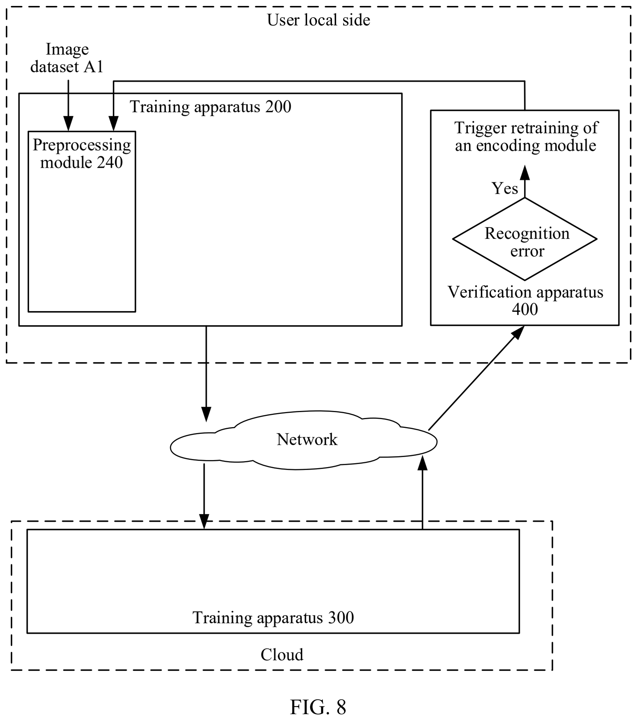

In some embodiments, as shown in FIG. 8, a verification apparatus 400 is further deployed on the user local side. The verification apparatus 400 is configured to verify effect of recognizing the target object from the image of the user by the image recognition model 100, and trigger retraining of the encoding module 110 when the effect is poor. Details are as follows.

The verification apparatus 400 may obtain the trained encoding module 110 from the training apparatus 200 or the training apparatus 300, and obtain the trained recognition module 120 from the training apparatus 300. The verification apparatus 400 inputs the image dataset A1 into the trained encoding module 110, to extract a feature of the target object from the image in the image dataset A1 by using the trained encoding module 110, to obtain an encoding vector B3. Then, the encoding vector B3 is input into the trained recognition module 120. The recognition module 120 recognizes the target object based on the encoding vector B3, to obtain a recognition result.

If the recognition result is incorrect, the verification apparatus 400 triggers retraining of the encoding module 110. For example, the user may determine whether the recognition result is incorrect. If the user determines that the recognition result is incorrect, the user may perform an operation indicating that the recognition result is incorrect. The verification apparatus 400 may trigger retraining of the encoding module 110 in response to the operation, for example, trigger the preprocessing module 240 to start preprocessing the image in the image dataset A1. A preprocessing result of the preprocessing module 240 is input into the encoding module 110, to trigger the training apparatus 200 to train the encoding module 110.

The training apparatus 200 may send, to the training apparatus 300, an encoding module 110 obtained through retraining, to trigger the training apparatus 300 to retrain the recognition module 120. For retraining of the encoding module 110, refer to the foregoing descriptions of training of the encoding module 110 for implementation. For retraining of the recognition module 120, refer to the foregoing descriptions of training of the recognition module 120 for implementation. Details are not described herein again.

Through the verification apparatus 400, the user can verify effect of the image recognition model 100, so that the image recognition model 100 is verified while leakage of privacy information of the user is avoided. In addition, the verification apparatus 400 triggers retraining of the encoding module 110, and then triggers retraining of the recognition module, to implement retraining of the entire image recognition model 100. This process does not need manual intervention, and is automatically performed by the verification apparatus 400, the preprocessing module 240, the training apparatus 200, and the training apparatus 300.

According to the foregoing solution, an image recognition model whose recognition effect meets a requirement can be obtained through training.

The following describes, with reference to a text recognition task, an example of the image recognition model training method provided in embodiments of this application.

Documents such as cheques and electronic receipts include personal privacy information such as a personal name, an address, and an amount. Privacy information protection is a primary concern when training needs to be performed for such documents. In view of this, in embodiments of this application, the encoding module 110 in the image recognition model 100 is trained on the user local side by using an image dataset of such documents. Details are as follows.

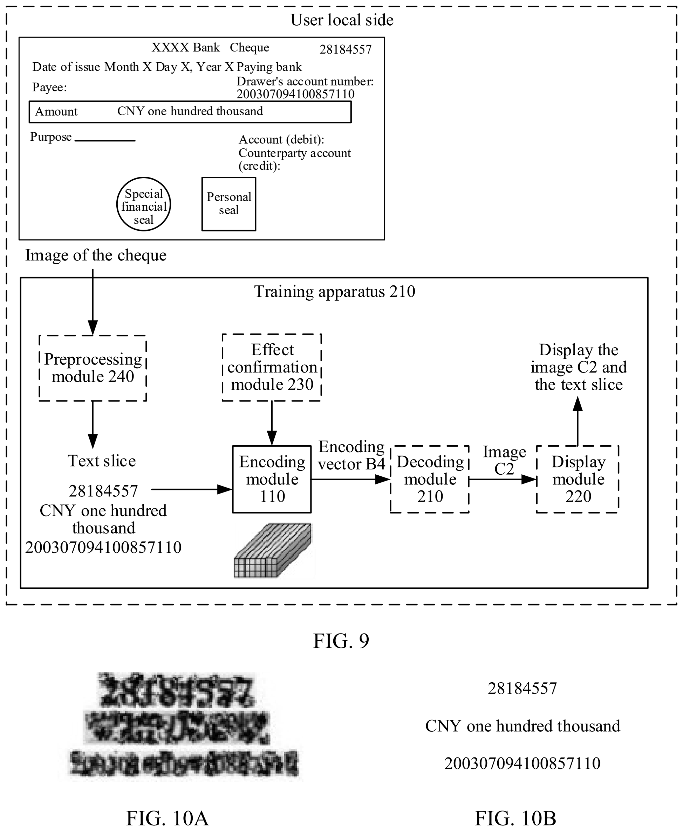

Refer to FIG. 9. A cheque is used as an example, and an image of the cheque may be input into the preprocessing module 240. The preprocessing module 240 slices off a local area in which a text is located in the image of the cheque, to obtain a text slice. The text slice is input into the encoding module 110. The encoding module 110 extracts a text feature from the text slice to obtain an encoding vector B4. The decoding module 210 generates an image C2 based on the encoding vector B4. The display module 220 displays the image C2 and the text slice to the user.

If the image C2 has much noise as shown in FIG. 10, and a human eye cannot clearly see a text in the image C2, it indicates that a generative model including the encoding module 110 and the decoding module 210 does not completely converge. In this case, parameters of the encoding module 110 and the decoding module 210 continue to be updated.

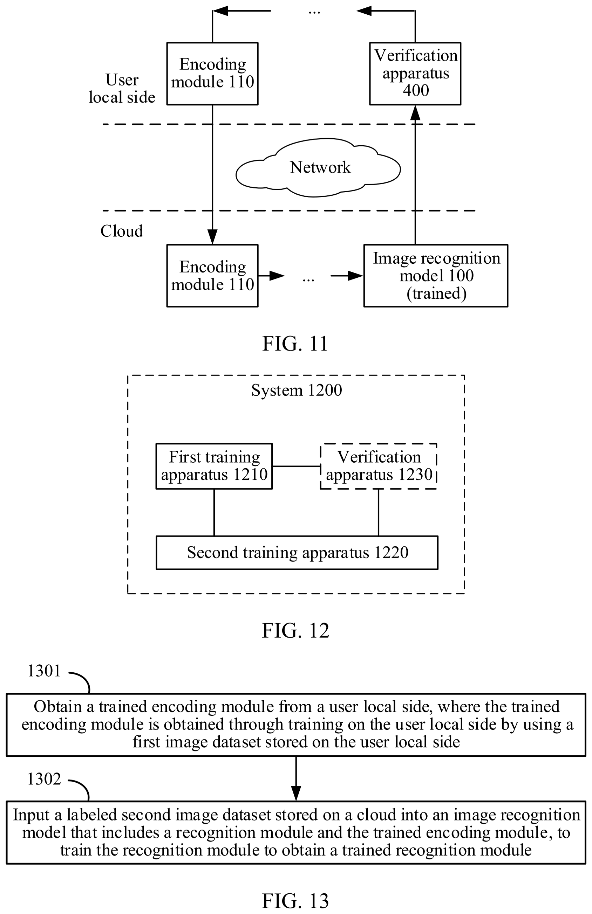

If the image C2 is consistent with or almost consistent with the text slice as shown in FIG. 11, and a text in the image C2 is clearly visible, it indicates that a generative model including the encoding module 110 and the decoding module 210 has converged. In this case, the encoding module 110 is a trained encoding module 110.

Refer to FIG. 11. The trained encoding module 110 may be transmitted from the user local side to the cloud. Generally, the image dataset of the user is usually at a level of 10 TB, and a data amount of the encoding module 110 is less than 1 GB. Therefore, the encoding module 110 is transmitted to the cloud instead of transmitting the image dataset of the user to the cloud, so that privacy information leakage is avoided, and transmission costs can be further reduced.

On the cloud, the image recognition model 100 may be obtained through training with reference to the trained encoder 110 and the labeled image dataset. For details, refer to the foregoing descriptions. Details are not described herein again.

Still refer to FIG. 11. The trained image recognition model 100 may be sent from the cloud to the user local side. The verification apparatus 400 deployed on the user local side may verify effect of recognizing the target object from the image of the user by the image recognition model 100. In addition, when the effect is poor, retraining of the encoding module 110 is triggered, and then retraining of the image recognition model 100 is triggered.

The foregoing describes the training method provided in embodiments of this application by using the text recognition task as an example. The training method may be further applicable to other tasks that need to recognize a target object from an image, for example, tasks such as classification, detection, segmentation, and target tracking in the computer vision field.

According to the training method provided in embodiments of this application, a capability of an encoding module for recognizing a target object from an image dataset of a user is trained on the user local side by using the image dataset of the user. The encoding module is trained while the image dataset of the user does not leave the user local side, so that user privacy leakage is avoided.

In addition, in the training method provided in embodiments of this application, the encoding module is transmitted from the user local side to the cloud, and the image dataset of the user does not need to be transmitted to the cloud, thereby avoiding user privacy leakage and reducing data transmission costs. Due to this advantage, even if there is no requirement for privacy information protection, the training method provided in embodiments of this application may be applied to a scenario in which a training set has a large data amount and is inconvenient to transmit, for example, a scenario of recognizing a target object from a drawing. Generally, an image dataset of the drawing has a large data amount and high transmission costs. According to the solution provided in embodiments of this application, the image dataset of the drawing does not need to be transmitted, and training of the encoding module can be implemented on a storage side of the image dataset of the drawing.

In addition, in the training method provided in embodiments of this application, supervised training of the image recognition model is implemented by using the labeled image dataset in the cloud, and the image dataset of the user does not need to be labeled, thereby reducing labor and time costs. Due to this advantage, the training method provided in embodiments of this application may be applied to a multi-language recognition task. Specifically, for the user, it is relatively difficult to find a labeler for some languages. According to the training method provided in embodiments of this application, the image dataset of the user does not need to be labeled. Therefore, the user does not need to search for a labeler.

In addition, according to the training method provided in embodiments of this application, through the verification apparatus deployed on the user local side, the user can verify effect of the image recognition model, thereby avoiding a risk of privacy information leakage caused by verification of the image recognition model.

Based on the content described above, an embodiment of this application provides an image recognition model training system 1200. An image recognition model includes an encoding module and a recognition module, the encoding module is configured to extract a feature of a target object from an image to obtain an encoding vector of the target object, and the recognition module is configured to recognize the target object based on the encoding vector of the target object. As shown in FIG. 12, the system 1200 includes:
a first training apparatus 1210 on a user local side, configured to input, into the encoding module, a first image dataset stored on the user local side, to train the encoding module to obtain a trained encoding module; and
a second training apparatus 1220 on a cloud, configured to: obtain the trained encoding module from the first training apparatus; and input a labeled second image dataset stored in the cloud into an image recognition model that includes the recognition module and the trained encoding module, to train the recognition module to obtain a trained recognition module.

In some embodiments, the second training apparatus 1220 is configured to: extract the feature of the target object from an image in the second image dataset based on the trained encoding module, to obtain a first encoding vector of the target object; input the first encoding vector into the recognition module, to recognize the target object to obtain a first recognition result; and update a parameter of the recognition module based on the first recognition result and a label of the image in the second image dataset.

In some embodiments, the encoding module corresponds to a decoding module, and the first training apparatus 1210 is configured to: extract the feature of the target object from an image in the first image dataset based on the encoding module, to obtain a second encoding vector of the target object; input the second encoding vector into the decoding module to generate a first image; display the first image and the image in the first image dataset; and complete training of the encoding module when a training termination operation performed by a user is received.

In some embodiments, the encoding module corresponds to a decoding module, and the first training apparatus 1210 is configured to: extract the feature of the target object from an image in the first image dataset based on the encoding module, to obtain a second encoding vector of the target object; input the second encoding vector into the decoding module to generate a second image; and update a parameter of the encoding module based on the image in the first image dataset and the second image.

In some embodiments, the system 1200 further includes a verification apparatus 1230 on the user local side, configured to: obtain the trained recognition module from the second training apparatus; extract the feature of the target object from the image in the first image dataset based on the trained encoding module, to obtain a third encoding vector of the target object; input the third encoding vector into the trained encoding module, to recognize the target object to obtain a second recognition result; and when the second recognition result is incorrect, indicate the first training apparatus to retrain the encoding module.

In some embodiments, the first training apparatus 1210 is further configured to: recognize, in the image in the first image dataset, a local area in which the target object is located; and input the local area into the encoding module.

In some embodiments, the image in the first image dataset and the image in the second image dataset each include a text; the first training apparatus 1210 is configured to train a capability of the encoding module for extracting a text feature from the image in the first image dataset; and the second training apparatus 1220 is configured to: extract a text feature from the image in the second image dataset based on the trained encoding module, to obtain the first encoding vector; and input the first encoding vector into the recognition module, to recognize the text in the image in the second image dataset to obtain the first recognition result.

For a function of the first training apparatus 1210, refer to the foregoing descriptions of the training apparatus 200. For a function of the second training apparatus 1220, refer to the foregoing descriptions of the training apparatus 300. For a function of the verification apparatus 1230, refer to the foregoing descriptions of the verification apparatus 400.

The first training apparatus 1210, the second training apparatus 1220, and the verification apparatus 1230 each may be implemented by using software, or may be implemented by using hardware. For example, the following describes an implementation of the first training apparatus 1210. Similarly, for implementations of the second training apparatus 1220 and the verification apparatus 1230, refer to the implementation of the first training apparatus 1210.

The apparatus is used as an example of a software functional unit, and the first training apparatus 1210 may include code that is run on a computing instance. The computing instance may be at least one of computing devices such as a physical host (computing device), a virtual machine, and a container. Further, there may be one or more computing devices. For example, the first training apparatus 1210 may include code that is run on a plurality of hosts/virtual machines/containers. It should be noted that, the plurality of hosts/virtual machines/containers configured to run the application program may be distributed in a same region (region), or may be distributed in different regions. The plurality of hosts/virtual machines/containers configured to run the code may be distributed in a same availability zone (availability zone, AZ), or may be distributed in different AZs. Each AZ includes one data center or a plurality of data centers with close geographical locations. Usually, one region may include a plurality of AZs.

Similarly, the plurality of hosts/virtual machines/containers configured to run the code may be distributed in a same virtual private cloud (virtual private cloud, VPC), or may be distributed in a plurality of VPCs. Usually, one VPC is disposed in one region. For cross-region communication between two VPCs in a same region and between VPCs in different regions, a communication gateway needs to be disposed in each VPC, and interconnection between the VPCs is implemented through the communication gateway.

The apparatus is used as an example of a hardware functional unit, and the first training apparatus 1210 may include at least one computing device, for example, a server. Alternatively, the first training apparatus 1210 may be a device implemented by using an application-specific integrated circuit (application-specific integrated circuit, ASIC) or a programmable logic device (programmable logic device, PLD), or the like. The PLD may be implemented by a complex programmable logic device (complex programmable logic device, CPLD), a field-programmable gate array (field-programmable gate array, FPGA), generic array logic (generic array logic, GAL), or any combination thereof.

A plurality of computing devices included in the first training apparatus 1210 may be distributed in a same region, or may be distributed in different regions. A plurality of computing devices included in the first training apparatus 1210 may be distributed in a same AZ, or may be distributed in different AZs. Similarly, a plurality of computing devices included in the first training apparatus 1210 may be distributed in a same VPC, or may be distributed in a plurality of VPCs. The plurality of computing devices may be any combination of computing devices such as the server, the ASIC, the PLD, the CPLD, the FPGA, and the GAL.

Based on the content described above, an embodiment of this application provides an image recognition model training method. The method may be applied to a training apparatus on a cloud, for example, the training apparatus 300 or the first training apparatus 1220 described above. An image recognition model includes an encoding module and a recognition module, the encoding module is configured to extract a feature of a target object from an image to obtain an encoding vector of the target object, and the recognition module is configured to recognize the target object based on the encoding vector of the target object. As shown in FIG. 13, the method includes the following steps.

Step 1301: Obtain a trained encoding module from a user local side, where the trained encoding module is obtained through training on the user local side by using a first image dataset stored on the user local side. For details, refer to the foregoing descriptions of step 501 and step 502 in FIG. 5 for implementation.

Step 1302: Input a labeled second image dataset stored in the cloud into an image recognition model that includes the recognition module and the trained encoding module, to train the recognition module to obtain a trained recognition module. For details, refer to the foregoing descriptions of step 503 in FIG. 5 for implementation.

In some embodiments, training the recognition model includes: extracting the feature of the target object from an image in the second image dataset based on the trained encoding module, to obtain a first encoding vector of the target object; inputting the first encoding vector into the recognition module, to recognize the target object to obtain a first recognition result; and updating a parameter of the recognition module based on the first recognition result and a label of the image in the second image dataset. For details, refer to the foregoing descriptions of step 5031 to step 5034 in FIG. 5 for implementation.

In some embodiments, an image in the first image dataset and the image in the second image dataset each include a text; and training the recognition module includes: extracting a text feature from the image in the second image dataset based on the trained encoding module, to obtain the first encoding vector; and inputting the first encoding vector into the recognition module, to recognize the text in the image in the second image dataset to obtain the first recognition result. For details, refer to the foregoing descriptions of the embodiments shown in FIG. 9 to FIG. 11 for implementation.

An embodiment of this application further provides an image recognition model training apparatus 1400. An image recognition model includes an encoding module and a recognition module, the encoding module is configured to extract a feature of a target object from an image to obtain an encoding vector of the target object, and the recognition module is configured to recognize the target object based on the encoding vector of the target object. The apparatus 1400 is located on a cloud, and the apparatus 1400 includes:
an obtaining module 1410, configured to obtain a trained encoding module from a user local side, where the trained encoding module is obtained through training on the user local side by using a first image dataset stored on the user local side; and
an input module 1420, configured to input a labeled second image dataset stored in the cloud into an image recognition model that includes the recognition module and the trained encoding module, to train the recognition module to obtain a trained recognition module.

Both the obtaining module 1410 and the input module 1420 may be implemented by using software, or may be implemented by using hardware. For example, the following uses the obtaining module 1410 as an example to describe an implementation of the obtaining module 1410. Similarly, for an implementation of the input module 1420, refer to the implementation of the obtaining module 1410.

The module is used as an example of a software functional unit, and the obtaining module 1410 may include code that is run on a computing instance. The computing instance may include at least one of a physical host (computing device), a virtual machine, and a container. Further, there may be one or more computing instances. For example, the obtaining module 1410 may include code that is run on a plurality of hosts/virtual machines/containers. It should be noted that, the plurality of hosts/virtual machines/containers configured to run the code may be distributed in a same region, or may be distributed in different regions. Further, the plurality of hosts/virtual machines/containers configured to run the code may be distributed in a same AZ, or may be distributed in different AZs. Each AZ includes one data center or a plurality of data centers with close geographical locations. Usually, one region may include a plurality of AZs.

Similarly, the plurality of hosts/virtual machines/containers configured to run the code may be distributed in a same VPC, or may be distributed in a plurality of VPCs. Usually, one VPC is disposed in one region. For cross-region communication between two VPCs in a same region and between VPCs in different regions, a communication gateway needs to be disposed in each VPC, and interconnection between the VPCs is implemented through the communication gateway.

The module is used as an example of a hardware functional unit, and the obtaining module 1410 may include at least one computing device, for example, a server. Alternatively, the obtaining module 1410 may be a device implemented by using an ASIC or a programmable logic device PLD, or the like. The PLD may be implemented by a CPLD, an FPGA, GAL, or any combination thereof.

A plurality of computing devices included in the obtaining module 1410 may be distributed in a same region, or may be distributed in different regions. A plurality of computing devices included in the obtaining module 1410 may be distributed in a same AZ, or may be distributed in different AZs. Similarly, a plurality of computing devices included in the obtaining module 1410 may be distributed in a same VPC, or may be distributed in a plurality of VPCs. The plurality of computing devices may be any combination of computing devices such as the server, the ASIC, the PLD, the CPLD, the FPGA, and the GAL.

It should be noted that, in another embodiment, the obtaining module 1410 may be configured to perform any step in the method shown in FIG. 13, and the input module 1420 may be configured to perform any step in the method shown in FIG. 13. Steps implemented by the obtaining module 1410 and the input module 1420 may be specified according to a requirement, and the obtaining module 1410 and the input module 1420 respectively implement different steps in the method shown in FIG. 13 to implement all functions of the apparatus 1400.

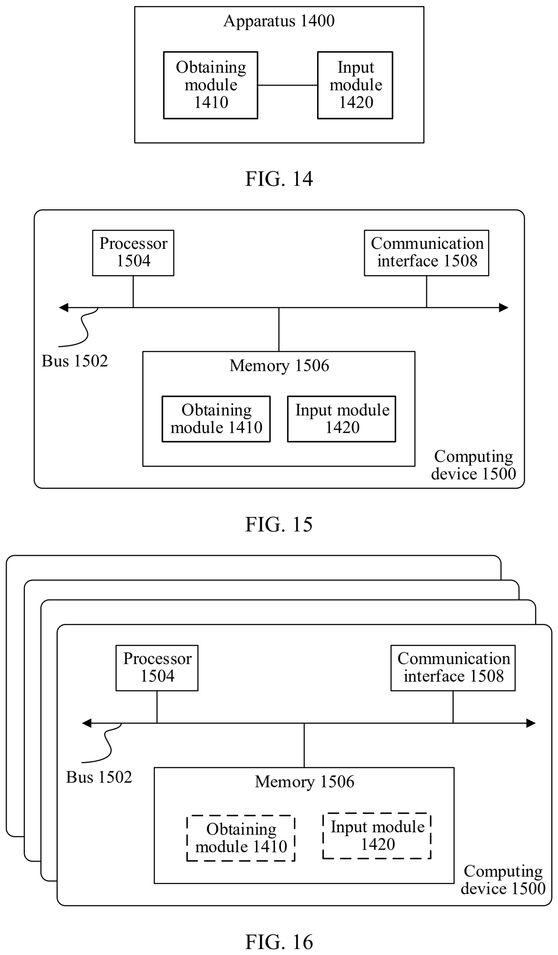

This application further provides a computing device 1500. As shown in FIG. 15, the computing device 1500 includes a bus 1502, a processor 1504, a memory 1506, and a communication interface 1508. The processor 1504, the memory 1506, and the communication interface 1508 communicate with each other through the bus 1502. The computing device 1500 may be a server or a terminal device. It should be understood that quantities of processors and memories in the computing device 1500 are not limited in this application.

The bus 1502 may be a peripheral component interconnect (peripheral component interconnect, PCI) bus, an extended industry standard architecture (extended industry standard architecture, EISA) bus, or the like. The bus may be classified into an address bus, a data bus, a control bus, or the like. For ease of representation, only one line is used for representation in FIG. 15, but this does not mean that there is only one bus or only one type of bus. The bus 1502 may include a path for transmitting information between the components (for example, the memory 1506, the processor 1504, and the communication interface 1508) of the computing device 1500.

The processor 1504 may include any one or more of the following processors: a central processing unit (central processing unit CPU), a graphics processing unit (graphics processing unit, GPU), a microprocessor (microprocessor, MP), a digital signal processor (digital signal processor DSP), or the like.

The memory 1506 may include a volatile memory (volatile memory), for example, a random access memory (random access memory, RAM). The memory 1506 may further include a non-volatile memory (non-volatile memory), for example, a read-only memory (read-only memory, ROM), a flash memory, a mechanical hard disk drive (hard disk drive, HDD), or a solid state drive (solid state drive, SSD).

The memory 1506 stores executable program code, and the processor 1504 executes the executable program code to separately implement functions of the obtaining module 1410 and the input module 1420, so as to implement the method shown in FIG. 13. In other words, the memory 1506 stores instructions for performing the method shown in FIG. 13.

The communication interface 1508 uses a transceiver module, for example, but not limited to, a network interface card or a transceiver, to implement communication between the computing device 1500 and another device or a communication network.

An embodiment of this application further provides a computing device cluster. The computing device cluster includes at least one computing device. The computing device may be a server, for example, a central server, an edge server, or a local server in a local data center. In some embodiments, the computing device may alternatively be a terminal device, for example, a desktop computer, a notebook computer, or a smartphone.

As shown in FIG. 16, the computing device cluster includes at least one computing device 1500. Memories 1506 in one or more computing devices 1500 in the computing device cluster may store same instructions for performing the method shown in FIG. 13.

In some possible implementations, the memories 1506 in the one or more computing devices 1500 in the computing device cluster may alternatively separately store some instructions for performing the method shown in FIG. 13. In other words, a combination of the one or more computing devices 1500 may jointly execute the instructions for performing the method shown in FIG. 13.

It should be noted that memories 1506 in different computing devices 1500 in the computing device cluster may store different instructions respectively used to perform some functions of the apparatus 1400. In other words, instructions stored in memories 1506 in different computing devices 1500 may implement functions of one or more modules in the obtaining module 1410 and the input module 1420.

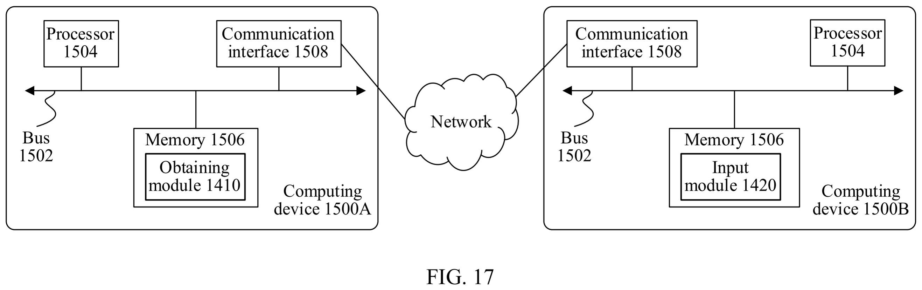

In some possible implementations, the one or more computing devices in the computing device cluster may be connected through a network. The network may be a wide area network, a local area network, or the like. FIG. 17 shows a possible implementation. As shown in FIG. 17, two computing devices 1500A and 1500B are connected through a network. Specifically, each computing device is connected to the network through a communication interface of the computing device. In this possible implementation, a memory 1506 in the computing device 1500A stores instructions for performing a function of the obtaining module 1410. In addition, a memory 1506 in the computing device 1500B stores instructions for performing a function of the input module 1420.

It should be understood that a function of the computing device 1500A shown in FIG. 17 may also be completed by a plurality of computing devices 1500. Similarly, a function of the computing device 1500B may also be completed by a plurality of computing devices 1500.

An embodiment of this application further provides another computing device cluster. For a connection relationship between computing devices in the computing device cluster, refer to the connection manner in the computing device cluster in FIG. 16 and FIG. 17 similarly. A difference lies in that memories 1506 in one or more computing devices 1500 in the computing device cluster may store same instructions for performing the method shown in FIG. 13.

In some possible implementations, the memories 1506 in the one or more computing devices 1500 in the computing device cluster may alternatively separately store some instructions for performing the method shown in FIG. 13. In other words, a combination of the one or more computing devices 1500 may jointly execute the instructions for performing the method shown in FIG. 13.

An embodiment of this application further provides a computer program product including instructions. The computer program product may be a software or program product that includes instructions and that can run on a computing device or be stored in any usable medium. When the computer program product runs on at least one computing device, the at least one computing device is enabled to perform the method shown in FIG. 13.

An embodiment of this application further provides a computer-readable storage medium. The computer-readable storage medium may be any usable medium that can be stored by a computing device, or a host migration device, such as a data center, including one or more usable media. The usable medium may be a magnetic medium (for example, a floppy disk, a hard disk, or a magnetic tape), an optical medium (for example, a DVD), a semiconductor medium (for example, a solid state drive), or the like. The computer-readable storage medium includes instructions. The instructions instruct a computing device to perform the method shown in FIG. 13.

Finally, it should be noted that the foregoing embodiments are merely used to describe the technical solutions of this application, but not limit the technical solutions of this application. Although this application is described in detail with reference to the foregoing embodiments, persons of ordinary skill in the art should understand that they may still modify the technical solutions described in the foregoing embodiments, or perform equivalent replacement on some technical features thereof. However, these modifications or replacements do not make the essence of the corresponding technical solutions depart from the protection scope of the technical solutions in embodiments of this application.

## Claims

1. An image recognition model training method, wherein an image recognition model comprises an encoding module and a recognition module, the encoding module is configured to extract a feature of a target object from an image to obtain an encoding vector of the target object, the recognition module is configured to recognize the target object based on the encoding vector of the target object, and the method comprises:
inputting, by a first training apparatus on a user local side into the encoding module, a first image dataset stored on the user local side, to train the encoding module to obtain a trained encoding module;
obtaining, by a second training apparatus on a cloud, the trained encoding module from the first training apparatus; and
inputting a labeled second image dataset stored in the cloud into an image recognition model that comprises the recognition module and the trained encoding module, to train the recognition module to obtain a trained recognition module.

2. The method according to claim 1, wherein training the recognition model comprises:
extracting the feature of the target object from an image in the second image dataset based on the trained encoding module, to obtain a first encoding vector of the target object;
inputting the first encoding vector into the recognition module, to recognize the target object to obtain a first recognition result; and
updating a parameter of the recognition module based on the first recognition result and a label of the image in the second image dataset.

3. The method according to claim 1 or 2, wherein the encoding module corresponds to a decoding module, and training the encoding module comprises:
extracting the feature of the target object from an image in the first image dataset based on the encoding module, to obtain a second encoding vector of the target object;
inputting the second encoding vector into the decoding module to generate a first image;
displaying the first image and the image in the first image dataset; and
completing training of the encoding module when a training termination operation performed by a user is received.

4. The method according to claim 1 or 2, wherein the encoding module corresponds to a decoding module, and training the encoding module comprises:
extracting the feature of the target object from an image in the first image dataset based on the encoding module, to obtain a second encoding vector of the target object;
inputting the second encoding vector into the decoding module to generate a second image; and
updating a parameter of the encoding module based on the image in the first image dataset and the second image.

5. The method according to any one of claims 1 to 4, wherein the method further comprises:
obtaining, by a verification apparatus on the user local side, the trained recognition module from the second training apparatus;
extracting the feature of the target object from the image in the first image dataset based on the trained encoding module, to obtain a third encoding vector of the target object;
inputting the third encoding vector into the trained encoding module, to recognize the target object to obtain a second recognition result; and
when the second recognition result is incorrect, indicating the first training apparatus to retrain the encoding module.

6. The method according to any one of claims 1 to 5, wherein inputting, into the encoding module, the first image dataset stored on the user local side comprises:
recognizing, in the image in the first image dataset, a local area in which the target object is located; and
inputting the local area into the encoding module.

7. The method according to any one of claims 1 to 6, wherein the image in the first image dataset and the image in the second image dataset each comprise a text;
training the encoding module comprises: training a capability of the encoding module for extracting a text feature from the image in the first image dataset; and
training the recognition module comprises: extracting a text feature from the image in the second image dataset based on the trained encoding module, to obtain the first encoding vector; and
inputting the first encoding vector into the recognition module, to recognize the text in the image in the second image dataset to obtain the first recognition result.

8. An image recognition model training system, wherein an image recognition model comprises an encoding module and a recognition module, the encoding module is configured to extract a feature of a target object from an image to obtain an encoding vector of the target object, the recognition module is configured to recognize the target object based on the encoding vector of the target object, and the system comprises:
a first training apparatus on a user local side, configured to input, into the encoding module, a first image dataset stored on the user local side, to train the encoding module to obtain a trained encoding module; and
a second training apparatus on a cloud, configured to: obtain the trained encoding module from the first training apparatus; and
input a labeled second image dataset stored in the cloud into an image recognition model that comprises the recognition module and the trained encoding module, to train the recognition module to obtain a trained recognition module.

9. The system according to claim 8, wherein the second training apparatus is configured to:
extract the feature of the target object from an image in the second image dataset based on the trained encoding module, to obtain a first encoding vector of the target object;
input the first encoding vector into the recognition module, to recognize the target object to obtain a first recognition result; and
update a parameter of the recognition module based on the first recognition result and a label of the image in the second image dataset.

10. The system according to claim 8 or 9, wherein the encoding module corresponds to a decoding module, and the first training apparatus is configured to:
extract the feature of the target object from an image in the first image dataset based on the encoding module, to obtain a second encoding vector of the target object;
input the second encoding vector into the decoding module to generate a first image;
display the first image and the image in the first image dataset; and
complete training of the encoding module when a training termination operation performed by a user is received.

11. The system according to claim 8 or 9, wherein the encoding module corresponds to a decoding module, and the first training apparatus is configured to:
extract the feature of the target object from an image in the first image dataset based on the encoding module, to obtain a second encoding vector of the target object;
input the second encoding vector into the decoding module to generate a second image; and
update a parameter of the encoding module based on the image in the first image dataset and the second image.

12. The system according to any one of claims 8 to 11, wherein the system further comprises:
a verification apparatus on the user local side, configured to: obtain the trained recognition module from the second training apparatus;
extract the feature of the target object from the image in the first image dataset based on the trained encoding module, to obtain a third encoding vector of the target object;
input the third encoding vector into the trained encoding module, to recognize the target object to obtain a second recognition result; and
when the second recognition result is incorrect, indicate the first training apparatus to retrain the encoding module.

13. The system according to any one of claims 8 to 12, wherein the first training apparatus is further configured to:
recognize, in the image in the first image dataset, a local area in which the target object is located; and
input the local area into the encoding module.

14. The system according to any one of claims 8 to 13, wherein the image in the first image dataset and the image in the second image dataset each comprise a text;
the first training apparatus is configured to train a capability of the encoding module for extracting a text feature from the image in the first image dataset; and
the second training apparatus is configured to: extract a text feature from the image in the second image dataset based on the trained encoding module, to obtain the first encoding vector; and
input the first encoding vector into the recognition module, to recognize the text in the image in the second image dataset to obtain the first recognition result.

15. An image recognition model training method, applied to a training apparatus on a cloud, wherein an image recognition model comprises an encoding module and a recognition module, the encoding module is configured to extract a feature of a target object from an image to obtain an encoding vector of the target object, the recognition module is configured to recognize the target object based on the encoding vector of the target object, and the method comprises:
obtaining a trained encoding module from a user local side, wherein the trained encoding module is obtained through training on the user local side by using a first image dataset stored on the user local side; and
inputting a labeled second image dataset stored in the cloud into an image recognition model that comprises the recognition module and the trained encoding module, to train the recognition module to obtain a trained recognition module.

16. The method according to claim 15, wherein training the recognition model comprises:
extracting the feature of the target object from an image in the second image dataset based on the trained encoding module, to obtain a first encoding vector of the target object;
inputting the first encoding vector into the recognition module, to recognize the target object to obtain a first recognition result; and
updating a parameter of the recognition module based on the first recognition result and a label of the image in the second image dataset.

17. The method according to claim 15 or 16, wherein an image in the first image dataset and the image in the second image dataset each comprise a text; and
training the recognition module comprises: extracting a text feature from the image in the second image dataset based on the trained encoding module, to obtain the first encoding vector; and
inputting the first encoding vector into the recognition module, to recognize the text in the image in the second image dataset to obtain the first recognition result.

18. An image recognition model training apparatus, wherein an image recognition model comprises an encoding module and a recognition module, the encoding module is configured to extract a feature of a target object from an image to obtain an encoding vector of the target object, the recognition module is configured to recognize the target object based on the encoding vector of the target object, the apparatus is located on a cloud, and the apparatus comprises:
an obtaining module, configured to obtain a trained encoding module from a user local side, wherein the trained encoding module is obtained through training on the user local side by using a first image dataset stored on the user local side; and
an input module, configured to input a labeled second image dataset stored in the cloud into an image recognition model that comprises the recognition module and the trained encoding module, to train the recognition module to obtain a trained recognition module.

19. The apparatus according to claim 18, wherein the apparatus further comprises an update module, wherein the input module is configured to: extract the feature of the target object from an image in the second image dataset based on the trained encoding module, to obtain a first encoding vector of the target object; and input the first encoding vector into the recognition module, to recognize the target object to obtain a first recognition result; and
the update module is configured to update a parameter of the recognition module based on the first recognition result and a label of the image in the second image dataset.

20. The apparatus according to claim 18 or 19, wherein an image in the first image dataset and the image in the second image dataset each comprise a text, and the input module is configured to:
extract a text feature from the image in the second image dataset based on the trained encoding module, to obtain the first encoding vector; and
input the first encoding vector into the recognition module, to recognize the text in the image in the second image dataset to obtain the first recognition result.

21. A computing device cluster, comprising at least one computing device, wherein each computing device comprises a processor and a memory; and
a processor of the at least one computing device is configured to execute instructions stored in a memory of the at least one computing device, to enable the computing device cluster to perform the method according to any one of claims 15 to 17.

22. A computer-readable storage medium, comprising computer program instructions, wherein when the computer program instructions are executed by a computing device cluster, the computing device cluster performs the method according to any one of claims 15 to 17.

23. A computer program product comprising instructions, wherein when the instructions are run by a computer device cluster, the computer device cluster is enabled to perform the method according to any one of claims 15 to 17.
